# FASCICULE DE BREVET EUROPEEN

(11) **EP 3 970 286 B1**
(45) Date de publication et mention de la délivrance du brevet: **07.06.2023**
(21) Numéro de dépôt: 21746527.7
(22) Date de dépôt: 08.07.2021
(51) Int. Cl.: H04B 10/118, H04B 10/112

(54) **TERMINAL DE COMMUNICATION OPTIQUE PAR SIGNAUX LASER**
ENDGERÄT ZUR OPTISCHEN KOMMUNIKATION DURCH LASERSIGNALE
TERMINAL FOR OPTICAL COMMUNICATION BY LASER SIGNALS

(30) Priorité: 20.07.2020 FR 2007584
(43) Date de publication de la demande: 23.03.2022
(73) Titulaire: Airbus Defence and Space SAS, 31402 Toulouse Cedex 4 (FR)
(72) Inventeur: BERCEAU, Paul, 31402 TOULOUSE CEDEX 4 (FR); BARBET, Adrien, 31402 TOULOUSE CEDEX 4 (FR)
(74) Mandataire: Plasseraud IP
(86) Numéro de dépôt international: PCT/FR2021/051261
(87) Numéro de publication internationale: WO 2022/018343

(56) Documents cités:
- CN-A- 109 728 855
- CN-B- 102 185 659
- US-B1- 7 277 641
- US-B2- 10 627 576

## Description

### Domaine technique

La présente description concerne un terminal et un procédé de communication optique par signaux laser. Elle concerne plus particulièrement un tel terminal et un tel procédé où des signaux laser qui sont reçus sont acheminés à un photodétecteur de réception par l'intermédiaire d'une fibre optique.

### Technique antérieure

L'utilisation de signaux laser en propagation libre, c'est-à-dire de signaux laser de communication qui ne sont pas guidés à l'intérieur de fibres optiques, pour transmettre des données sur de très grandes distances est bien connue, notamment pour des applications spatiales. Elle nécessite d'utiliser des terminaux optiques dont les directions de réception et d'émission sont précisément contrôlées. Ce contrôle assure en particulier que chaque terminal reçoit effectivement les signaux qui sont transmis par l'autre, alors que les deux terminaux peuvent avoir un déplacement relatif. Ce déplacement relatif peut être particulièrement important lorsqu'au moins un des deux terminaux est situé à bord d'un satellite en orbite, par exemple autour de la Terre. L'autre terminal peut alors être situé à bord d'un autre satellite aussi en orbite, ou être situé au sol sur la Terre, ou encore être situé à bord d'un aéronef en vol ou à bord de tout autre véhicule ou navire. Pour chaque terminal, l'écart instantané qui est appliqué entre sa direction d'émission et la direction selon laquelle il reçoit les signaux laser en provenance de l'autre terminal est couramment appelé écart de pointage en avant («point-ahead offset» en anglais).

Le document US 10,627,576 B2 décrit un terminal de communication optique par signaux laser qui incorpore des fibres optiques dans chacune de ses voies d'émission et de réception. Un miroir orientable permet d'aligner les directions de propagation des signaux optiques par rapport à des extrémités des fibres optiques, en fonction de signaux de détection d'orientation qui sont délivrés par un capteur matriciel.

Le document US 7,277,641 B1 décrit des terminaux de communication optique par signaux laser qui possèdent chacun plusieurs voies de réception et une ouverture optique d'entrée unique qui est commune aux voies de réception.

### Problème technique

Un enjeu important pour l'utilisation de la technologie de communication optique par signaux laser consiste à réduire l'encombrement et le poids des terminaux.

Une partie de cet enjeu concerne notamment l'acheminement au sein d'un terminal, des signaux laser de communication optique qui sont reçus par ce terminal jusqu'au photodétecteur de réception.

Une autre partie de l'enjeu consiste à réduire le nombre des capteurs optiques, et de façon plus générale le nombre de composants optiques, qui sont nécessaires au fonctionnement de chaque terminal.

Dans cette situation, un but de l'invention est alors de proposer une nouvelle structure de terminal de communication optique par signaux laser, y compris l'utilisation de composants optiques particuliers, afin d'apporter une solution à l'enjeu précité.

### Résumé de l'invention

Pour atteindre l'un au moins de ces buts ou un autre, un premier aspect de l'invention propose un nouveau terminal de communication optique par signaux laser qui comprend un détecteur de poursuite et d'acquisition, de type capteur d'image matriciel dans lequel des éléments photosensibles sont agencés à des intersections de lignes et de colonnes à l'intérieur d'une surface de détection. Ce terminal est agencé pour, lors d'une utilisation, recevoir des premiers signaux laser émis par une source qui est externe au terminal, et transmettre des seconds signaux laser à destination de cette source externe. En outre, le terminal est agencé pour qu'une partie des premiers signaux laser et qu'une partie des seconds signaux laser soient incidentes sur la surface de détection du détecteur de poursuite et d'acquisition. Des ajustements de l'orientation du terminal par rapport à la direction de réception et de l'écart de pointage en avant sont ainsi possibles en utilisant des signaux de détection qui sont produits par certains au moins des éléments photosensibles du détecteur de poursuite et d'acquisition.

Par ailleurs, pour récupérer les données qui sont transmises par la source externe, le terminal de l'invention est agencé en outre pour, lors de son utilisation, injecter une autre partie des premiers signaux laser dans une fibre optique, par une extrémité d'entrée de cette fibre optique. Pour cela, le terminal est adapté pour que, lors de son utilisation :
- un rayonnement appelé rayonnement de calibration soit conduit dans la fibre optique et sorte par l'extrémité d'entrée de celle-ci, et
- une image de l'extrémité d'entrée de la fibre optique soit formée sur la surface de détection du détecteur de poursuite et d'acquisition avec le rayonnement de calibration. Ainsi, le détecteur de poursuite et d'acquisition est aussi adapté pour assurer que la ainsi-nommée autre partie des premiers signaux laser, c'est-à-dire la partie des signaux laser reçus qui est destinée à un photodétecteur de réception, soit effectivement injectée dans la fibre optique par son extrémité d'entrée. Une telle combinaison de fonctions pour le détecteur de poursuite et d'acquisition est particulièrement avantageuse pour réduire l'encombrement, le poids et le coût du terminal.

Selon une caractéristique supplémentaire de l'invention, le terminal comprend en outre au moins un élément de filtrage spectral qui est disposé pour être traversé au moins par la partie des seconds signaux laser et le rayonnement de calibration qui parviennent ensuite à la surface de détection du détecteur de poursuite et d'acquisition. Cet au moins un élément de filtrage spectral possède une valeur de transmission pour une longueur d'onde des seconds signaux laser qui est inférieure à une valeur moyenne de transmission de ce même élément de filtrage spectral qui est effective sur un intervalle spectral de détection du rayonnement de calibration par le détecteur de poursuite et d'acquisition. Grâce à l'utilisation d'un tel élément de filtrage spectral, il est possible d'éviter que le détecteur de poursuite et d'acquisition soit saturé à chaque endroit de sa surface de détection auquel parvient la partie des seconds signaux laser qui est utilisée pour la fonction de poursuite, tout en assurant que ce détecteur de poursuite et d'acquisition présente une sensibilité suffisante pour détecter simultanément le rayonnement de calibration. Ainsi, toutes les fonctions du détecteur de poursuite et d'acquisition dans le terminal de l'invention, c'est-à-dire l'ajustement de l'orientation du terminal par rapport à la direction de réception, l'ajustement de l'écart de pointage en avant et aussi l'injection des signaux laser reçus dans la fibre optique de guidage au photodétecteur de réception, sont compatibles pour être réalisées avec le détecteur de poursuite et d'acquisition et un nombre réduit de composants optiques supplémentaires.

Plusieurs emplacements sont possibles alternativement pour l'au moins un élément de filtrage spectral qui est introduit par l'invention, tout au long d'une portion de chemin optique qui est commune au rayonnement de calibration et à la partie des seconds signaux laser qui est destinée à parvenir jusqu'au détecteur de poursuite et d'acquisition. En particulier, l'au moins un élément de filtrage spectral peut être situé devant ou contre la surface de détection du détecteur de poursuite et d'acquisition, c'est-à-dire notamment entre cette surface de détection et un élément imageur qui est utilisé pour former sur cette surface de détection l'image de l'extrémité d'entrée de la fibre optique.

Avantageusement, la valeur de transmission de l'au moins un élément de filtrage spectral pour la longueur d'onde des seconds signaux laser peut être inférieure à un centième, de préférence inférieure à un millième, de sa valeur moyenne de transmission qui est effective sur l'intervalle spectral de détection du rayonnement de calibration par le détecteur de poursuite et d'acquisition. Il est ainsi possible pour le détecteur de poursuite et d'acquisition de détecter sans être saturé la partie des seconds signaux laser et le rayonnement de calibration avec une sensibilité suffisante, même si la partie des seconds signaux laser possède une intensité très supérieure à celle du rayonnement de calibration.

Dans des modes préférés de réalisation de l'invention, l'une au moins des caractéristiques additionnelles suivantes peut être reproduite optionnellement, seule ou en combinaison de plusieurs d'entre elles :
- l'au moins un élément de filtrage spectral qui est utilisé selon l'invention dans le terminal peut être constitué par un filtre, ou un ensemble de plusieurs filtres combinés ;
- l'au moins un élément de filtrage spectral qui est utilisé selon l'invention dans le terminal peut être de type filtre interférentiel à couches multiples ;
- l'au moins un élément de filtrage spectral qui est utilisé selon l'invention dans le terminal peut être du type filtre à réjection de bande, et être adapté pour que la longueur d'onde des seconds signaux laser soit dans un intervalle de réjection de cet au moins un élément de filtrage spectral, et qu'au moins une longueur d'onde du rayonnement de calibration soit en dehors de l'intervalle de réjection ;
- l'au moins un élément de filtrage spectral peut être adapté en outre pour qu'une longueur d'onde des premiers signaux laser soit aussi en dehors de l'intervalle de réjection ; et
- le terminal peut être agencé en outre pour recevoir, lors de son utilisation, des signaux de balises en provenance de la source externe, et être adapté pour qu'une partie de ces signaux de balise soit aussi incidente sur la surface de détection du détecteur de poursuite et d'acquisition. Dans ce cas, l'au moins un élément de filtrage spectral à réjection de bande peut être adapté en outre pour qu'une longueur d'onde des signaux de balise soit aussi en dehors de l'intervalle de réjection.

Dans des modes de réalisation de l'invention qui sont particulièrement avantageux, le terminal peut comprendre en outre :
- le photodétecteur de réception qui est sensible à la longueur d'onde des premiers signaux laser, et qui est couplé optiquement à une extrémité de sortie de la fibre optique, opposée à l'extrémité d'entrée, de façon à produire des signaux électriques de réception en fonction des premiers signaux laser qui sont reçus par le terminal ; et
- un amplificateur optique qui est efficace pour les premiers signaux laser, et qui est situé sur un trajet optique de la ci-nommée autre partie de ceux-ci entre l'extrémité d'entrée de la fibre optique et le photodétecteur de réception.

Alors, l'amplificateur optique peut produire, lors de l'utilisation du terminal, un rayonnement d'émission spontanée amplifiée, et une partie de ce rayonnement d'émission spontanée amplifiée peut constituer le rayonnement de calibration en sortant par l'extrémité d'entrée de la fibre optique.

Dans des réalisations alternatives de l'invention, le rayonnement de calibration peut être produit par une source optique annexe qui est couplée à la fibre optique de façon à ce que ce rayonnement produit la source annexe sorte par l'extrémité d'entrée de la fibre optique.

En particulier, des valeurs numériques qui sont conformes aux spécifications suivantes peuvent être adoptées :
la longueur d'onde des premiers signaux laser peut être comprise entre 1540 nm (nanomètre) et 1545 nm ;
la longueur d'onde des seconds signaux laser peut être comprise entre 1550 nm et 1555 nm ;
une extension spectrale du rayonnement de calibration peut contenir l'intervalle qui s'étend de 1530 nm à 1560 nm ;
lorsque l'au moins un élément de filtrage spectral est du type à réjection de bande, son intervalle de réjection peut être compris entre 1550 nm environ et 1575 nm environ ; et
le cas échéant, la longueur d'onde des signaux de balise peut être comprise entre 1580 nm et 2000 nm.

Un second aspect de l'invention propose un procédé de communication qui comprend les étapes suivantes :
- fournir un terminal de communication optique par signaux laser, comprenant un détecteur de poursuite et d'acquisition, de type capteur d'image matriciel dans lequel des éléments photosensibles sont agencés à des intersections de lignes et de colonnes à l'intérieur d'une surface de détection, le terminal étant agencé pour, lors d'une utilisation de ce terminal :
   recevoir des premiers signaux laser émis par une source qui est externe au terminal, diriger une partie des premiers signaux laser sur la surface de détection du détecteur de poursuite et d'acquisition,
   injecter une autre partie des premiers signaux laser dans une fibre optique par une extrémité d'entrée de cette fibre optique, et
   transmettre des seconds signaux laser vers l'extérieur du terminal, et
- transmettre à l'aide du terminal les seconds signaux laser à destination de la source externe ;
- pendant que les seconds signaux laser sont transmis :
   diriger une partie de ces seconds signaux laser sur la surface de détection du détecteur de poursuite et d'acquisition,
   diriger simultanément sur la surface de détection du détecteur de poursuite et d'acquisition un rayonnement appelé rayonnement de calibration qui est conduit dans la fibre optique et qui sort par l'extrémité d'entrée de cette fibre optique, et
   former une image de l'extrémité d'entrée de la fibre optique sur la surface de détection du détecteur de poursuite et d'acquisition avec le rayonnement de calibration.

Selon l'invention, le procédé comprend en outre l'étape supplémentaire suivante :
avant que la partie des seconds signaux laser qui est dirigée sur la surface de détection du détecteur de poursuite et d'acquisition et que le rayonnement de calibration qui forme l'image de l'extrémité d'entrée de la fibre optique parviennent à la surface de détection du détecteur de poursuite et d'acquisition, réduire une valeur du quotient de l'intensité de la partie des seconds signaux laser par l'intensité moyenne du rayonnement de calibration qui est effective pour une détection de ce rayonnement de calibration par le détecteur de poursuite et d'acquisition.

Avantageusement, la valeur du quotient de l'intensité de la partie des seconds signaux laser qui est dirigée sur la surface de détection du détecteur de poursuite et d'acquisition par l'intensité moyenne du rayonnement de calibration qui forme l'image de l'extrémité d'entrée de la fibre optique et qui est effective pour la détection de ce rayonnement de calibration par le détecteur de poursuite et d'acquisition, peut être réduite selon un facteur supérieur à cent, de préférence supérieur à mille.

Cette réduction du quotient peut être effectuée en utilisant au moins un élément de filtrage spectral, de sorte que le terminal de communication optique par signaux laser qui est fourni par le procédé de l'invention soit conforme au premier aspect de celle-ci tel que présenté plus haut.

### Brève description des figures

Les caractéristiques et avantages de la présente invention apparaîtront plus clairement dans la description détaillée ci-après d'exemples de réalisation non-limitatifs, en référence aux figures annexées parmi lesquelles :
[Fig. 1] est un schéma optique d'un terminal de communication optique par signaux laser qui est conforme à l'invention ; et
[Fig. 2] est un diagramme de transmission d'un filtre spectral qui peut être utilisé dans le terminal de [Fig. 1] pour mettre en oeuvre l'invention.

### Description détaillée de l'invention

Pour raison de clarté, les dimensions des éléments qui sont représentés dans ces figures ne correspondent ni à des dimensions réelles, ni à des rapports de dimensions réels. En outre, certains de ces éléments ne sont représentés que symboliquement.

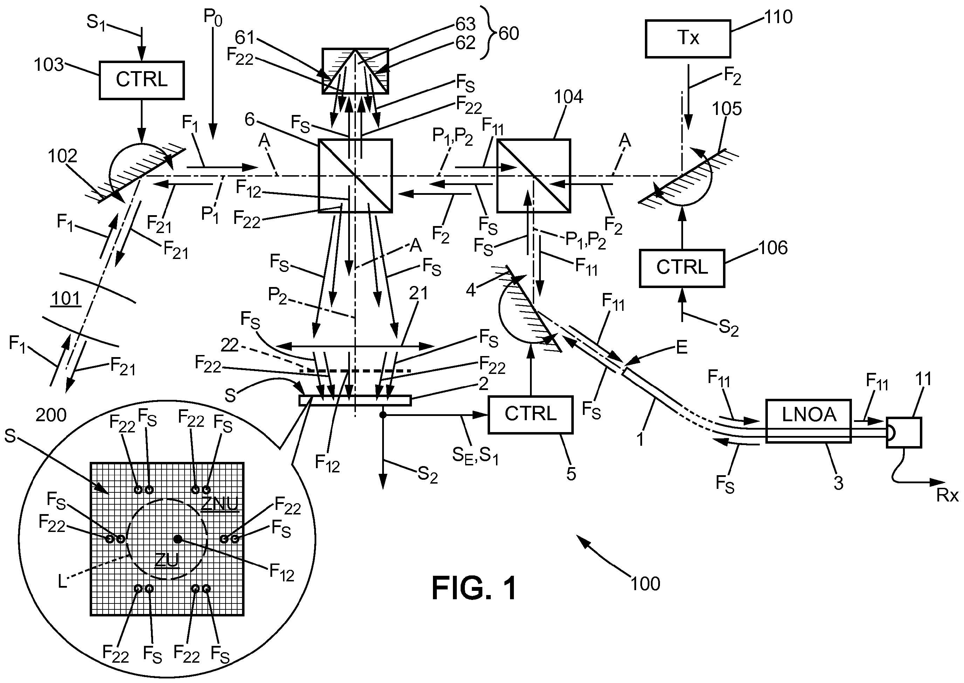

Dans [Fig. 1], la référence 100 désigne le terminal de communication optique par signaux laser dans son ensemble, et F₁ désigne le faisceau des signaux laser qui sont reçus par ce terminal 100 en provenance d'un terminal éloigné 200. Ces signaux laser reçus par le terminal 100 ont été appelés premiers signaux laser dans la partie générale de la description, et le terminal 200 a été appelé source externe. Les signaux laser du faisceau F₁ sont acheminés à l'intérieur du terminal 100 par une voie optique de réception qui aboutit à un photodétecteur 11, celui-ci pouvant être une photodiode ultra-rapide. Des signaux électriques de réception qui sont ainsi obtenus sont notés Rx dans la figure. Le trajet des signaux laser reçus dans la voie optique de réception, entre une entrée optique P₀ du terminal 100 et le photodétecteur 11, comprend un premier chemin optique P₁ et une fibre optique 1.

D'autres signaux laser qui sont transmis par le terminal 100 au terminal éloigné 200, constituent une partie de faisceau F₂₁ et ont été appelés seconds signaux laser dans la partie générale de la description. Ils sont transmis à l'intérieur du terminal 100 par une voie optique d'émission.

Les terminaux 100 et 200 peuvent être embarqués chacun à bord d'un satellite différent, ou bien l'un peut être à bord d'un satellite et l'autre peut être installé à la surface de la Terre ou d'une autre planète.

Les références énumérées ci-dessous ont les significations suivantes :
101 : optique de collecte de rayonnement du terminal 100, pouvant servir à la fois à collecter le faisceau F₁ en provenance du terminal éloigné 200, et à transmettre la partie de faisceau F₂₁ en direction de ce terminal éloigné 200. Par exemple, l'optique de collecte 101 peut être un télescope ;
102 : dispositif de pointage du terminal 100, qui peut éventuellement regrouper un dispositif de pointage fin et un dispositif de pointage grossier. Par simplicité, le dispositif de pointage 102 est représenté sous forme d'un miroir orientable à réaction rapide, ou «fast steering mirror» en anglais, mais il peut aussi être combiné avec une partie d'un système de contrôle d'attitude et d'orbite d'un satellite à bord duquel se trouve le terminal 100 ;
103 : contrôleur du dispositif de pointage 102, noté CTRL ;
104 : dispositif de couplage de la voie optique d'émission et de la voie optique de réception du terminal 100. Ce peut être un biprisme à séparation par polarisation, désigné couramment par PBS pour «Polarizing Beam Splitter» en anglais. De ce cas, des composants de contrôle de polarisation effectifs pour les parties de faisceaux qui traversent le dispositif de couplage 104 sont utilisés, bien qu'ils n'ont pas été représentés dans la figure ;
105 : dispositif de calibration d'une direction d'émission du terminal 100, c'est-à-dire de la direction de la partie de faisceau F₂₁. Ce dispositif 105 est optionnel, sans liaison directe avec l'invention, et peut comprendre un miroir à orientation variable ;
106 : contrôleur du dispositif de calibration 105, pour ajuster la direction d'émission du terminal 100 ; et
110 : source des signaux laser qui sont transmis par le terminal 100 au terminal éloigné 200, notée Tx.

Le chemin optique qui est compris entre la source de signaux laser 110 et l'optique de collecte de rayonnement 101 constitue la voie optique d'émission du terminal 100. Il est commun avec la voie optique de réception entre l'optique de collecte de rayonnement 101 et le dispositif de couplage 104.

Le fonctionnement de chacun des composants 101 à 110 et leur coopération au sein du terminal 100 sont connus de l'Homme du métier. En particulier, le dispositif de pointage 102 est destiné à compenser des vibrations auxquelles le terminal 100 peut être soumis, et qui dévieraient sa direction de pointage par rapport à une direction d'émission voulue pour que les signaux laser qui sont transmis par ce terminal 100 (i.e. la partie de faisceau F₂₁ en aval de l'optique de collecte 101) parviennent précisément au terminal éloigné 200. Pour cela, le contrôleur 103 reçoit des signaux de détection S₁, qui identifient la direction de réception instantanée des signaux laser provenant du terminal éloigné 200 (i.e. le faisceau F₁). Cette fonction de compensation des vibrations, à temps de réponse très court, est différente de celle d'un dispositif de déviation variable 4 qui sera décrit plus loin, et dont le temps de réaction peut être plus long.

La source 110 produit les signaux laser à transmettre par le terminal 100 au terminal éloigné 200 sous forme d'un faisceau F₂. Le dispositif de couplage 104 est disposé pour que le faisceau F₂ des signaux laser à transmettre par le terminal 100 traverse un biprisme 6. Le biprisme 6 constitue un séparateur de faisceau par division d'intensité, couramment désigné par BS pour «Beam Splitter» en anglais, mais d'autres types de diviseurs de faisceau peuvent être utilisés de façon équivalente. Le faisceau F₂ est alors divisé par le biprisme 6 en deux parties de faisceau : la partie de faisceau F₂₁ qui est transmise à travers l'optique de collecte de rayonnement 101 à destination du terminal éloigné 200, et une autre partie de faisceau F₂₂ qui est dirigée vers un capteur d'image matriciel 2.

Le capteur d'image matriciel 2 peut être par exemple de type CMOS. Il peut être associé à un imageur 21, par exemple une lentille convergente, de sorte que la surface de détection S du capteur d'image matriciel 2 soit située dans un plan de focalisation de l'imageur 21. Ainsi, chaque faisceau de rayonnement collimaté qui est incident sur l'imageur 21 est focalisé en un ou plusieurs point(s) d'éclairement sur la surface de détection S du capteur d'image matriciel 2. La (les) position(s) de ces points d'éclairement représente(nt) alors la direction d'incidence du faisceau.

La direction de la partie de faisceau F₂₁, en amont du dispositif de pointage 102 par rapport au sens de propagation des signaux laser d'émission, peut être souhaitée confondue avec un axe optique du terminal 100. Pour cela, le contrôleur 106 asservit le système de calibration 105 en fonction de signaux de détection S₂ qui sont produits par le capteur d'image matriciel 2 à partir de la partie de faisceau F₂₂, de sorte que la direction de la partie de faisceau F₂₁ soit superposée à l'axe optique du terminal 100 en amont du dispositif de pointage 102. Dans le mode de réalisation qui est décrit ici, la partie de faisceau F₂₂ est dirigée vers le capteur d'image matriciel 2 en étant réfléchie par un ensemble réflecteur en trièdre 60.

Selon une constitution préférée, l'ensemble réflecteur 60 peut être formé par trois miroirs plans 61, 62 et 63, qui sont limités chacun entre deux bords rectilignes et concourants selon un angle α. Les miroirs plans 61, 62 et 63 sont associés selon leurs bords, pour former un trièdre symétrique d'angle au sommet α. L'angle α de chaque miroir 61, 62 et 63 peut être choisi supérieur à 90° (degré), par exemple égal à 90,5°. Il peut être ajusté en fonction des distances entre les composants optiques utilisés, leurs tailles, leurs valeurs de longueur focale, etc. Dans ces conditions, un faisceau de rayonnement qui est incident dans le trièdre des miroirs 61, 62 et 63 est rétro-réfléchi sous forme de six faisceaux dont les directions respectives sont réparties symétriquement autour d'une direction de réflexion moyenne, cette dernière étant symétrique de la direction du faisceau incident par rapport à l'axe central du trièdre.

Lorsqu'un tel ensemble réflecteur en trièdre 60 est utilisé, la partie de faisceau F₂₂ éclaire six points dans la surface de détection S du capteur d'image matriciel 2 (voir les points qui sont référencés F₂₂ dans l'encart de [Fig. 1]). Ces six points de la partie de faisceau F₂₂ sont situés aux sommets d'un hexagone régulier dont le centre correspond à la direction du faisceau F₂ en amont du biprisme 6. Lorsque le contrôleur de calibration 106 réalise l'asservissement du dispositif 105, l'hexagone de détection de la partie de faisceau F₂₂ est centrée sur le point d'intersection de l'axe optique du terminal 100 avec la surface de détection S. Le contrôleur de calibration 106 peut déterminer la direction de la partie de faisceau F₂₂ à partir des signaux S₂ représentatifs de l'hexagone de détection. Un tel fonctionnement de calibration est décrit dans la demande de brevet EP 09 172 199, publiée sous le numéro EP 2 173 042 et intitulée «Ensemble d'émission-réception optique avec contrôle de la direction d'émission».

Le biprisme 6 divise en outre le faisceau F₁ des signaux laser qui sont reçus par le terminal 100 en une première partie de faisceau F₁₁ qui est destinée à parvenir au photodétecteur de réception 11, et une seconde partie de faisceau F₁₂ qui est destinée à parvenir au capteur d'image matriciel 2. Le terminal 100 peut être agencé pour que le biprisme 6 soit traversé sans déviation par la partie F₁₁ du faisceau F₁ des signaux laser reçus. La partie F₁₂ du faisceau F₁ est réfléchie par le biprisme 6 directement vers le capteur d'image matriciel 2. Le point de la surface de détection S auquel la partie de faisceau F₁₂ est détectée représente la direction de réception du faisceau F₁ par le terminal 100, et donc aussi la direction de la partie de faisceau F₁₁. Ce point détection du faisceau F₁₂ est identifié par les signaux de détection S₁ qui sont produits par le capteur d'image matriciel 2.

Dans les conditions de fonctionnement du terminal 100 qui viennent d'être décrites, le décalage entre les directions respectives de la partie de faisceau F₂₁ et du faisceau F₁ est l'angle de pointage en avant qui est commandé au terminal 100. Cet angle de pointage en avant est caractérisé par les signaux de détection S₁ et S₂, représentant l'écart en deux dimensions, entre le centre de l'hexagone des six points de la surface de détection S qui sont éclairés par la partie de faisceau F₂₂ d'une part, et le point qui est éclairé par la partie de faisceau F₁₂ d'autre part. Il peut être produit en orientant le champ optique d'entrée de l'optique de collecte de rayonnement 101 à l'aide du dispositif de pointage 102, de sorte que le point d'impact de la partie de faisceau F₁₂ dans la surface de détection S du capteur d'image matriciel 2, soit à l'endroit qui correspond à l'opposé de l'angle de pointage en avant voulu. Alternativement, l'écart de pointage en avant peut être produit en utilisant le dispositif de calibration de la direction d'émission 105. Ainsi, le capteur d'image matriciel 2 sert de détecteur de poursuite et d'acquisition.

Un système d'injection est utilisé dans le terminal 100, pour injecter la partie de faisceau F₁₁ dans la fibre optique 1. Ce système d'injection a pour fonction de compenser des décalages transversaux qui peuvent affecter la position de l'extrémité d'entrée E de la fibre optique 1, ainsi qu'éventuellement l'angle de pointage en avant du terminal 100 vis-à-vis de la partie de faisceau F₁₁. Il garantit ainsi que la partie F₁₁ du faisceau F₁ soit incidente sur l'extrémité d'entrée E de la fibre optique 1, de sorte que cette partie de faisceau F₁₁ soit acheminée ensuite par la fibre optique 1, par propagation guidée à l'intérieur de celle-ci, au photodétecteur 11. La fibre optique 1 peut être du type monomode pour le rayonnement de la partie de faisceau F₁₁. Dans ce cas, son extrémité d'entrée E peut avoir un diamètre de l'ordre de 10 µm (micromètre) pour une longueur d'onde des signaux laser reçus de l'ordre de 1,5 µm.

Pour cela, le premier chemin optique P₁, relie l'entrée optique P₀ du terminal 100 à l'extrémité d'entrée E de la fibre optique 1, en étant orienté en direction de la fibre optique 1. Le chemin optique P₁ est destiné à être suivi par la partie F₁₁ du faisceau F₁ des signaux laser reçus. Pour raison de clarté de la figure, une lentille de focalisation de la partie de faisceau F₁₁, dans le plan focal de laquelle se trouve l'extrémité d'entrée E de la fibre optique 1, n'a pas été représentée, son utilisation étant bien connue de l'Homme du métier.

Un second chemin optique, noté P₂, est prévu pour du rayonnement qui est utilisé pour repérer la position de l'extrémité d'entrée E de la fibre optique 1. Le second chemin optique P₂ relie l'extrémité d'entrée E de la fibre optique 1 au capteur d'image matriciel 2, en direction de ce capteur 2.

Chacun des chemins optiques P₁ et P₂ peut être suivi par le (les) faisceau(x) de rayonnement concerné(s) sans que la direction de chaque faisceau soit fixée par le chemin optique suivi. Le système d'injection contrôle la direction de chaque faisceau de rayonnement à l'intérieur du chemin optique P₁, P₂ où ce faisceau se propage.

Le rayonnement qui est destiné à repérer la position de l'extrémité d'entrée E de la fibre optique 1 a été appelé rayonnement de calibration dans la partie générale de la présente description. Le faisceau de ce rayonnement est noté F_{S} dans la figure.

Selon un mode de réalisation particulièrement avantageux de l'invention, la fibre optique 1 transmet la partie F₁₁ du faisceau F₁ des signaux laser reçus à un amplificateur optique 3, puis elle transmet la partie de faisceau F₁₁ amplifiée qui est ainsi obtenue au photodétecteur 11. L'amplificateur 3, noté LNOA pour «low-noise optical amplifier» en anglais, peut être du type amplificateur à fibre dopée à l'erbium, couramment désigné par EDFA pour «Erbium-doped fiber-amplifier». De façon connue, un tel amplificateur produit un rayonnement d'émission spontanée amplifiée, ou ASE pour «amplified spontaneous emission», dont une partie est guidée à l'intérieur de la fibre optique 1 en direction de son extrémité d'entrée E. La fibre optique 1 est efficace pour conduire un tel rayonnement d'émission spontanée amplifiée à partir de l'amplificateur 3 jusqu'à l'extrémité d'entrée de fibre E. Après être sortie par l'extrémité d'entrée E, cette partie du rayonnement d'émission spontanée amplifiée constitue le faisceau de rayonnement de calibration F_{S}. Il se propage dans le chemin optique P₂ à destination du capteur d'image matriciel 2, afin de repérer la position de l'extrémité E de la fibre optique 1, par imagerie sur la surface de détection S du capteur d'image matriciel 2.

Dans une réalisation compacte du terminal 100, les deux chemins optiques P₁ et P₂ peuvent être couplés par le biprisme 6, pour être superposés entre ce biprisme 6 et l'extrémité E de la fibre optique 1. Le faisceau de rayonnement de calibration F_{S} peut ainsi être d'abord réfléchi par le biprisme 6 en direction de l'ensemble réflecteur 60, puis rétro-réfléchi par ce dernier, et traverser ensuite à nouveau le biprisme 6 sans être dévié, en direction du capteur d'image matriciel 2 à travers l'imageur 21. Ainsi, des points de la surface de détection S auquel le faisceau F_{S} est détecté représentent la position de l'extrémité d'entrée E de la fibre optique 1. Comme pour la partie de faisceau F₂₂, du fait de l'ensemble réflecteur 60 en trièdre, le faisceau F_{S} est détecté en six points qui sont situés aux sommets d'un autre hexagone régulier. Ces six points détection du faisceau de calibration F_{S} sont identifiés par des signaux de détection S_{E} qui sont aussi produits par le capteur d'image matriciel 2. Le point central de cet hexagone supplémentaire identifie la position de l'extrémité d'entrée E de la fibre optique 1.

Ainsi, le capteur d'image matriciel 2 reçoit simultanément la partie F₁₂ du faisceau F₁ des signaux laser qui sont reçus par le terminal 100, la partie F₂₂ du faisceau F₂ des signaux laser à transmettre par le terminal 100, et le faisceau de rayonnement de calibration F_{S}. Cette combinaison de fonctions pour le capteur d'image matriciel 2 participe à l'optimisation du terminal 100 qui est apportée par l'invention. L'ensemble réflecteur en trièdre 60 n'intervenant pas dans la caractérisation de la direction de la partie F₁₁ du faisceau F₁, cette direction est caractérisée par un point de détection unique dans la surface de détection S du capteur d'image matriciel 2. Comme déjà indiqué, ce point est éclairé par la partie de faisceau F₁₂, représentative de la direction de la partie de faisceau F₁₁ qui est destinée à être dirigée sur l'extrémité d'entrée E de la fibre optique 1. Pour cela, le point de détection de la partie de faisceau F₁₂ est destiné à coïncider avec le centre de l'hexagone des points de détection du faisceau de rayonnement de calibration F_{S}.

Un dispositif de déviation variable 4 est en outre disposé sur le chemin optique P₁, par exemple dans la partie de chemin qui est commune aux chemins optiques P₁ et P₂ mais sans que cela soit indispensable. Dans la structure du terminal 100 qui est décrite ici, le dispositif 104 de couplage des voies optiques d'émission et de réception est situé entre le biprisme 6 et le dispositif de déviation variable 4 dans les chemins optique P₁ et P₂. Le dispositif de déviation variable 4 est distinct du dispositif 105 de calibration de la direction d'émission du terminal 100, et aussi distinct du dispositif de pointage 102. Le dispositif de déviation variable 4 peut être constitué par un miroir plan dédié qui est monté sur un support à deux axes de rotation, de façon à réfléchir dans une direction variable la partie F₁₁ du faisceau F₁ des signaux laser reçus. Pour le cas particulier où le miroir à orientation variable du dispositif 4 réfléchit simultanément la partie F₁₁ du faisceau F₁ et le faisceau de rayonnement de calibration F_{S}, comme illustré par [Fig. 1], ceux-ci ont des directions de propagation identiques, avec des sens de propagation opposés, entre le dispositif 4 et l'extrémité d'entrée E de la fibre optique 1 d'une part, et entre le dispositif 4 et le biprisme 6 d'autre part, lorsque le miroir du dispositif 4 est orienté de sorte que la partie de faisceau F₁₁ soit incidente sur l'extrémité d'entrée E de la fibre optique 1. L'encart de [Fig. 1] montre les six points de la surface de détection S du capteur d'image matriciel 2 qui reçoivent du rayonnement de calibration lors d'un fonctionnement du système d'injection. La direction du faisceau F_{S} telle que produite par le miroir orientable du dispositif 4 correspond au barycentre de ces six points, qui peut être déterminé par le contrôleur d'injection 5 à partir des signaux de détection S_{E}, ceux-ci indiquant les positions respectives des six points dans la surface de détection S. Un calcul à effectuer par le contrôleur d'injection 5 pour déterminer le barycentre des six points représentatifs de la direction du faisceau F_{S} à partir des signaux de détection S_{E} est évident et accessible à l'Homme du métier. Grâce à la configuration en trièdre de l'ensemble réflecteur 60, avec des angles au sommet différents de 90°, les signaux de détection S₁ produits par le capteur d'image matriciel 2, qui identifient la direction du faisceau F₁ des signaux laser reçus au niveau de l'entrée optique P₀, ne peuvent pas être confondus avec les signaux de détection S_{E}, aussi produits par le capteur d'image matriciel 2 mais qui caractérisent la position de l'extrémité E de la fibre optique 1.

Alors, si l'axe central de l'ensemble réflecteur 60 coïncide avec l'axe optique du terminal 100 à la sortie du biprisme 6, la partie de faisceau F₁₂ et la direction moyenne des six parties du faisceau F_{S} qui sont générées par l'ensemble réflecteur 60 intersectent toutes les deux la surface de détection S du capteur d'image matriciel 2 à un même point de détection. A l'inverse, un écart entre le point de détection de la partie de faisceau F₁₂ et le barycentre des six points de détection du faisceau F_{S} sur la surface de détection S du capteur d'image matriciel 2 signifie que la partie F₁₁ du faisceau F₁ des signaux laser reçus n'intercepte pas l'extrémité d'entrée E de la fibre optique 1.

Un contrôleur d'injection 5, noté CTRL, permet d'asservir l'orientation du miroir orientable du dispositif 4 en fonction des signaux de détection S_{E}. Il est conçu pour commander l'orientation de ce miroir de façon à réduire un écart entre une direction apparente dans le miroir, dans laquelle se trouve l'extrémité d'entrée E de la fibre optique 1, telle que caractérisée par les signaux de détection S_{E}, et la direction de la partie de faisceau F₁₁ telle que détectée par le capteur d'image matriciel 2 en utilisant la partie de faisceau F₁₂. A partir des signaux de détection S_{E} et S₁, le contrôleur d'injection 5 commande l'orientation du miroir du dispositif 4 de façon à réduire un écart entre les directions respectives du faisceau F_{S} et de la partie de faisceau F₁₁, jusqu'à produire une superposition de ces directions. De cette façon, il est possible de compenser des décalages transversaux de la partie de faisceau F₁₁ par rapport à l'extrémité E de la fibre optique 1. De tels décalages transversaux peuvent être dus à des variations de température qui affectent une partie au moins du système d'injection, et/ou dus à des modifications de la direction apparente du faisceau F₁ des signaux laser reçus au niveau de l'entrée optique P₀, et/ou dus à toute autre cause. Ainsi, la partie de faisceau F₁₁ des signaux laser qui sont reçus par le terminal 100 est injectée continûment dans la fibre optique 101 par son extrémité E.

Le capteur d'image matriciel 2 participe donc aux trois fonctions suivantes : contrôle du dispositif de pointage 102, contrôle du dispositif de calibration 105, et contrôle du dispositif de déviation 4, respectivement pour compenser des vibrations qui affectent le terminal 100 dans son ensemble, pour contrôler de la direction d'émission du terminal 100, et pour contrôler l'injection des signaux laser reçus dans la fibre optique de guidage vers le photodétecteur de réception. Une telle combinaison de fonctions est particulièrement avantageuse pour réduire l'encombrement, le poids et la consommation énergétique du terminal de communication optique 100.

Lors du fonctionnement du terminal 100, la direction du faisceau F₁ des signaux laser qui sont reçus par le terminal 100, telle que détectée par le capteur d'image matriciel 2 sous forme d'un point d'éclairement unique, est contenue dans une zone restreinte de la surface de détection S de ce capteur 2. Cette zone restreinte est conjuguée avec l'ensemble des directions de réception qui sont contenues dans le champ optique d'entrée de l'optique de collecte de rayonnement 101. Elle est notée ZU et a été appelée zone utile pour la fonction de poursuite dans la partie générale de la présente description. A contrario, les points d'une partie de la surface de détection S qui est complémentaire de la zone utile pour la fonction de poursuite ZU, ne sont conjugués optiquement avec aucune direction de réception à travers l'optique de collecte 101. Cette partie de la surface de détection S qui est complémentaire à la zone ZU est notée ZNU dans l'encart de [Fig. 1]. La limite L est la frontière entre les zones ZU et ZNU. Alors, il est avantageux que l'angle α du trièdre de l'ensemble réflecteur 60 soit sélectionné pour que les six points de la surface de détection S qui sont éclairés par le faisceau de rayonnement de calibration F_{S}, et aussi les six autres points qui sont éclairés par la partie de faisceau d'émission F₂₂, soient dans la zone ZNU. Ainsi, les signaux de détection S₁ produits par le capteur d'image matriciel 2, qui identifient la direction du faisceau F₁ des signaux laser reçus par le terminal 100, sont toujours séparés des signaux de détection S_{E}, aussi produits par le capteur d'image matriciel 2 mais qui caractérisent la position de l'extrémité E de la fibre optique 1. De même, les signaux de détection S₁ sont ainsi toujours séparés des signaux de détection S₂ produits par le capteur d'image matriciel 2 et qui identifient la direction du faisceau F₂ des signaux laser transmis par le terminal 100.

Lors de ce fonctionnement du terminal 100, chacun des six points de détection de la partie de faisceau F₂₂ reçoit une intensité de rayonnement qui est très supérieure à celle de chacun des six points de détection du faisceau de rayonnement de calibration F_{S}. Pour le mode particulier de réalisation du terminal 100 décrit ici, l'intensité de rayonnement qui parvient aux six points de détection de la partie de faisceau F₂₂ est aussi très supérieure à celle qui parvient au point de détection de la partie de faisceau F₁₂. Cette disproportion dans les niveaux d'intensité est due à la puissance élevée de la source 110 des signaux laser qui sont destinés à être transmis par le terminal 100 vers l'extérieur. Un risque de saturation du capteur d'image matriciel 2 en résulte aux points de détection de la partie de faisceau F₂₂, qui est susceptible de réduire la précision avec laquelle peuvent être identifiés les endroits auxquels cette partie de faisceau F₂₂ est incidente dans la surface de détection S. Pour supprimer ce risque, la présente invention propose d'ajouter au moins un élément de filtrage spectral, qui atténue la partie de faisceau F₂₂ par rapport au faisceau de rayonnement de calibration F_{S}, et éventuellement aussi par rapport à la partie de faisceau F₁₂. Cet élément de filtrage spectral peut être constitué par un filtre à réjection de bande 22, qui peut être placé devant la surface de détection S. Un tel filtre 22 peut être situé alternativement entre l'imageur 21 et le capteur d'image matriciel 2, ou entre le biprisme 6 et l'imageur 21, ou entre l'ensemble réflecteur 60 et le biprisme 6, ou encore entre le dispositif de couplage 104 des voies d'émission et de réception et le biprisme 6. Le filtre 22 peut être réalisé sous forme d'un empilement de couches minces, qui produit par effet interférentiel un intervalle spectral de réjection pour une utilisation en transmission de ce filtre. Couramment, un tel filtre interférentiel peut être constitué d'au moins vingt couches minces superposées, voire d'au moins cent couches minces superposées, en fonction de spécifications de ce filtre. Avantageusement, le filtre 22 peut être sélectionné pour présenter un facteur supérieur à cent, de préférence supérieur à mille, entre certaines de ses valeurs de transmission qui sont effectives à l'extérieur de l'intervalle de réjection et d'autres de ses valeurs qui sont effectives à l'intérieur de l'intervalle de réjection. Le filtre 22 est alors sélectionné pour que la longueur d'onde de la source 110 des signaux laser à transmettre soit à l'intérieur de son intervalle de réjection, et une partie au moins du rayonnement de calibration qui constitue le faisceau F_{S} soit à l'extérieur de l'intervalle de réjection. De préférence, la longueur d'onde du faisceau F₁ des signaux laser qui sont reçus par le terminal 100 en provenance de la source externe 200, ainsi que des signaux de balise qui peuvent être émis par la source externe 200 lors d'une phase d'acquisition, sont aussi à l'extérieur de l'intervalle de réjection de bande.

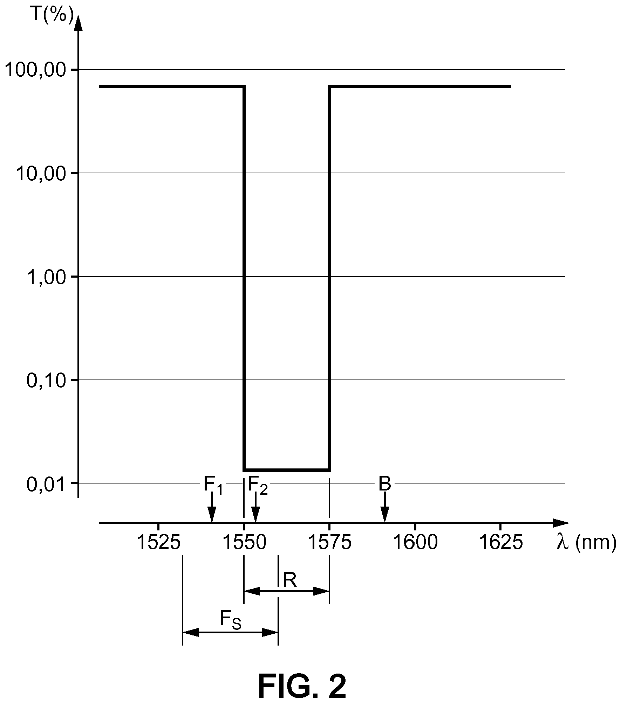

Dans le diagramme spectral de transmission du filtre 22 tel que représenté dans [Fig. 2], l'axe vertical repère en échelle logarithmique les valeurs de la transmission spectrale, notée T et exprimée en pourcents, et l'axe horizontal repère les valeurs de la longueur d'onde, notée λ. R désigne l'intervalle de réjection qui s'étend de 1550 nm environ à 1575 nm environ. Les valeurs de la transmission spectrale T du filtre 22 dans l'intervalle R sont typiquement inférieures à 0,05%. Elles sont supérieures à 95% entre 1525 nm et 1545 nm, de même qu'entre 1580 nm et 1625 nm. Alors, les valeurs suivantes peuvent être utilisées pour une session de communication optique par signaux laser entre le terminal 100 et la source externe 200 :
longueur d'onde la source 110, qui produit le faisceau F₂ : 1552 nm environ, plus généralement comprise entre 1550 nm et 1555 nm ;
extension spectrale du rayonnement d'émission spontanée amplifiée, qui produit le faisceau de rayonnement de calibration F_{S} : de moins de 1530 nm à plus de 1560 nm ;
longueur d'onde des signaux laser reçus par le terminal 100, qui constituent le faisceau F₁ : 1542 nm environ ; plus généralement comprise entre 1540 nm et 1545 nm ; et
longueur d'onde des signaux de balise reçus par le terminal 100 de la part de la source externe 200 : 1590 nm environ.

Dans le diagramme de [Fig. 2], les longueurs d'onde précitées sont désignées respectivement et dans l'ordre d'énumération précédent par F₂, F_{S}, F₁ et B pour les signaux de balise. L'intervalle spectral de sensibilité du capteur d'image matriciel 2 s'étend au moins de 1525 nm à 1625 nm, et ce capteur est supposé posséder un rendement de détection qui est à peu près constant sur cet intervalle spectral.

Il est entendu que l'invention peut être reproduite en modifiant des aspects secondaires du terminal de communication optique qui a été décrit en détail ci-dessus, tout en conservant certains au moins des avantages cités. Notamment, des composants optiques qui réalisent des fonctions similaires à celles des composants décrits, peuvent être utilisés alternativement à ces derniers. En outre, le système utilisé pour injecter dans la fibre optique la partie des signaux laser reçus qui est destinée à parvenir au photodétecteur de réception, peut être réalisé selon une structure différente de celle décrite en détail. Enfin, toutes les valeurs numériques qui ont été données ne l'ont été qu'à titre d'exemples, et peuvent être modifiées en fonction de la mission à laquelle est dédié le terminal de communication optique.

## Revendications

1. Terminal (100) de communication optique par signaux laser, comprenant un détecteur de poursuite et d'acquisition (2), de type capteur d'image matriciel dans lequel des éléments photosensibles sont agencés à des intersections de lignes et de colonnes à l'intérieur d'une surface de détection (S),
le terminal (100) étant agencé pour, lors d'une utilisation dudit terminal, recevoir des premiers signaux laser émis par une source (200) qui est externe audit terminal, et transmettre des seconds signaux laser à destination de ladite source externe, et pour qu'une partie des premiers signaux laser et une partie des seconds signaux laser soient incidentes sur la surface de détection (S) du détecteur de poursuite et d'acquisition (2),
le terminal (100) étant agencé en outre pour, lors de l'utilisation dudit terminal, injecter une autre partie des premiers signaux laser dans une fibre optique (1), par une extrémité d'entrée (E) de ladite fibre optique, et le terminal étant adapté pour que, lors de l'utilisation :
- un rayonnement appelé rayonnement de calibration soit conduit dans la fibre optique (1) et sorte par l'extrémité d'entrée (E) de ladite fibre optique, et
- une image de l'extrémité d'entrée (E) de la fibre optique (1) soit formée sur la surface de détection (S) du détecteur de poursuite et d'acquisition (2) avec le rayonnement de calibration,
le terminal (100) étant **caractérisé en ce qu'**il comprend en outre au moins un élément de filtrage spectral (22) qui est disposé de façon à être traversé au moins par la partie des seconds signaux laser et le rayonnement de calibration qui parviennent ensuite à la surface de détection (S) du détecteur de poursuite et d'acquisition (2), l'au moins un élément de filtrage spectral ayant une valeur de transmission pour une longueur d'onde des seconds signaux laser qui est inférieure à une valeur moyenne de transmission dudit au moins un élément de filtrage spectral effective sur un intervalle spectral de détection du rayonnement de calibration par le détecteur de poursuite et d'acquisition.

2. Terminal (100) selon la revendication 1, dans lequel la valeur de transmission de l'au moins un élément de filtrage spectral (22) pour la longueur d'onde des seconds signaux laser est inférieure à un centième, de préférence inférieure à un millième, de la valeur moyenne de transmission dudit au moins un élément de filtrage spectral qui est effective sur l'intervalle spectral de détection du rayonnement de calibration par le détecteur de poursuite et d'acquisition (2).

3. Terminal (100) selon la revendication 1 ou 2, dans lequel l'au moins un élément de filtrage spectral (22) est de type filtre interférentiel à couches multiples.

4. Terminal (100) selon l'une quelconque des revendications précédentes, dans lequel l'au moins un élément de filtrage spectral (22) est de type filtre à réjection de bande, et adapté pour que la longueur d'onde des seconds signaux laser soit dans un intervalle de réjection dudit au moins un élément de filtrage spectral, et qu'au moins une longueur d'onde du rayonnement de calibration soit en dehors de l'intervalle de réjection.

5. Terminal (100) selon la revendication 4, dans lequel l'au moins un élément de filtrage spectral (22) est adapté en outre pour qu'une longueur d'onde des premiers signaux laser soit en dehors de l'intervalle de réjection.

6. Terminal (100) selon la revendication 4 ou 5, dans lequel le terminal est agencé en outre pour recevoir, lors de l'utilisation dudit terminal, des signaux de balises en provenance de la source externe (200), et est adapté pour qu'une partie desdits signaux de balise soit incidente sur la surface de détection (S) du détecteur de poursuite et d'acquisition (2),
et dans lequel l'au moins un élément de filtrage spectral (22) est adapté en outre pour qu'une longueur d'onde des signaux de balise soit aussi en dehors de l'intervalle de réjection.

7. Terminal (100) selon l'une quelconque des revendications précédentes, comprenant en outre :
- un photodétecteur de réception (11) qui est sensible à une longueur d'onde desdits premiers signaux laser, et qui est couplé optiquement à une extrémité de sortie de la fibre optique (1), opposée à l'extrémité d'entrée (E), de façon à produire des signaux électriques de réception en fonction des premiers signaux laser reçus par le terminal (100) ; et
- un amplificateur optique (3) qui est efficace pour lesdits premiers signaux laser, et qui est situé sur un trajet optique de ladite autre partie des premiers signaux laser entre l'extrémité d'entrée (E) de la fibre optique (1) et le photodétecteur de réception (11),
dans lequel l'amplificateur optique (3) produit, lors de l'utilisation du terminal (100), un rayonnement d'émission spontanée amplifiée, et une partie dudit rayonnement d'émission spontanée amplifiée constitue le rayonnement de calibration en sortant par l'extrémité d'entrée (E) de la fibre optique (1).

8. Terminal (100) selon l'une quelconque des revendications précédentes, adapté de sorte que, lors de l'utilisation dudit terminal :
la longueur d'onde des premiers signaux laser soit comprise entre 1540 nm et 1545 nm ;
la longueur d'onde des seconds signaux laser soit comprise entre 1550 nm et 1555 nm ; et
une extension spectrale du rayonnement de calibration contient l'intervalle qui s'étend de 1530 nm à 1560 nm.

9. Terminal (100) selon les revendications 4 et 8, dans lequel l'intervalle de réjection de l'au moins un élément de filtrage spectral (22) est compris entre 1550 nm environ et 1575 nm environ.

10. Terminal (100) selon les revendications 6 et 8, adapté en outre pour que, lors de l'utilisation dudit terminal:
la longueur d'onde des signaux de balise soit comprise entre 1580 nm et 2000 nm.

11. Procédé de communication comprenant les étapes suivantes :
- fournir un terminal (100) de communication optique par signaux laser, comprenant un détecteur de poursuite et d'acquisition (2), de type capteur d'image matriciel dans lequel des éléments photosensibles sont agencés à des intersections de lignes et de colonnes à l'intérieur d'une surface de détection (S), le terminal étant agencé pour, lors d'une utilisation dudit terminal :
recevoir des premiers signaux laser émis par une source (200) qui est externe audit terminal (100),
diriger une partie desdits premiers signaux laser sur la surface de détection (S) du détecteur de poursuite et d'acquisition (2),
injecter une autre partie des premiers signaux laser dans une fibre optique (1) par une extrémité d'entrée (E) de ladite fibre optique ; et
transmettre des seconds signaux laser vers l'extérieur du terminal (100), et
- transmettre à l'aide du terminal (100) les seconds signaux laser à destination de la source externe (200) ;
- pendant que les seconds signaux laser sont transmis :
diriger une partie desdits seconds signaux laser sur la surface de détection (S) du détecteur de poursuite et d'acquisition (2),
diriger simultanément sur la surface de détection (S) du détecteur de poursuite et d'acquisition (2) un rayonnement appelé rayonnement de calibration qui est conduit dans la fibre optique (1) et qui sort par l'extrémité d'entrée (E) de ladite fibre optique, et
former une image de l'extrémité d'entrée (E) de la fibre optique (1) sur la surface de détection (S) du détecteur de poursuite et d'acquisition (2) avec le rayonnement de calibration,
**caractérisé en ce qu'**il comprend en outre l'étape supplémentaire suivante :
avant que la partie des seconds signaux laser qui est dirigée sur la surface de détection (S) du détecteur de poursuite et d'acquisition (2) et que le rayonnement de calibration qui forme l'image de l'extrémité d'entrée (E) de la fibre optique (1) parviennent à ladite surface de détection du détecteur de poursuite et d'acquisition, réduire une valeur d'un quotient d'une intensité de ladite partie des seconds signaux laser par une intensité moyenne dudit rayonnement de calibration qui est effective pour une détection dudit rayonnement de calibration par le détecteur de poursuite et d'acquisition.

12. Procédé selon la revendication 11, suivant lequel la valeur du quotient de l'intensité de la partie des seconds signaux laser qui est dirigée sur la surface de détection (S) du détecteur de poursuite et d'acquisition (2) par l'intensité moyenne du rayonnement de calibration qui forme l'image de l'extrémité d'entrée (E) de la fibre optique (1) et qui est effective pour la détection dudit rayonnement de calibration par le détecteur de poursuite et d'acquisition, est réduite selon un facteur supérieur à cent, de préférence supérieur à mille.

## Patentansprüche

1. Endgerät (100) zur optischen Kommunikation durch Lasersignale, das einen Tracking- und Erfassungsdetektor (2) von der Art Matrix-Bildsensor enthält, in dem lichtempfindliche Elemente an Schnittpunkten von Zeilen und Spalten innerhalb einer Detektionsfläche (S) angeordnet sind,
wobei das Endgerät (100) eingerichtet ist, bei einer Benutzung des Endgeräts erste Lasersignale zu empfangen, die von einer Quelle (200) außerhalb des Endgeräts gesendet werden, und zweite Lasersignale an die externe Quelle zu übertragen, und damit ein Teil der ersten Lasersignale und ein Teil der zweiten Lasersignale auf die Detektionsfläche (S) des Tracking- und Erfassungsdetektor (2) auftreffen,
wobei das Endgerät (100) außerdem eingerichtet ist, bei der Benutzung des Endgeräts einen anderen Teil der ersten Lasersignale über ein Eingangsende (E) der optischen Faser in eine optische Faser (1) zu injizieren, und das Endgerät eingestellt ist, damit bei der Benutzung:
- eine Kalibrierstrahlung genannte Strahlung in der optischen Faser (1) geführt wird und über das Eingangsende (E) der optischen Faser austritt, und
- ein Bild des Eingangsendes (E) der optischen Faser (1) auf der Detektionsfläche (S) des Tracking- und Erfassungsdetektors (2) mit der Kalibrierstrahlung geformt wird,
wobei das Endgerät (100) **dadurch gekennzeichnet ist, dass** es außerdem mindestens ein spektrales Filterelement (22) enthält, das so angeordnet ist, dass es mindestens von dem Teil der zweiten Lasersignale und der Kalibrierstrahlung durchquert wird, die anschließend zur Detektionsfläche (S) des Tracking- und Erfassungsdetektors (2) gelangen, wobei das mindestens eine spektrale Filterelement einen Übertragungswert für eine Wellenlänge der zweiten Lasersignale hat, der niedriger ist als ein mittlerer Übertragungswert des mindestens einen spektralen Filterelements, der in einem Detektionsspektralintervall der Kalibrierstrahlung durch den Tracking- und Erfassungsdetektor effektiv ist.

2. Endgerät (100) nach Anspruch 1, wobei der Übertragungswert des mindestens einen spektralen Filterelements (22) für die Wellenlänge der zweiten Lasersignale niedriger ist als ein Hundertstel, vorzugsweise niedriger als ein Tausendstel des mittleren Übertragungswerts des mindestens einen spektralen Filterelements, der in dem Detektionsspektralintervall der Kalibrierstrahlung durch den Tracking- und Erfassungsdetektor (2) effektiv ist.

3. Endgerät (100) nach Anspruch 1 oder 2, wobei das mindestens eine spektrale Filterelement (22) von der Art Mehrschicht-Interferenzfilter ist.

4. Endgerät (100) nach einem der vorhergehenden Ansprüche, wobei das mindestens eine spektrale Filterelement (22) von der Art Bandsperrfilter und eingestellt ist, damit die Wellenlänge der zweiten Lasersignale sich in einem Sperrintervall des mindestens einen spektralen Filterelements befindet, und damit mindestens eine Wellenlänge der Kalibrierstrahlung sich außerhalb des Sperrintervalls befindet.

5. Endgerät (100) nach Anspruch 4, wobei das mindestens eine spektrale Filterelement (22) außerdem eingestellt ist, damit eine Wellenlänge der ersten Lasersignale sich außerhalb des Sperrintervalls befindet.

6. Endgerät (100) nach Anspruch 4 oder 5, wobei das Endgerät außerdem eingerichtet ist, bei der Benutzung des Endgeräts Bakensignale von der externen Quelle (200) zu empfangen, und eingestellt ist, damit ein Teil der Bakensignale auf die Detektionsfläche (S) des Tracking- und Erfassungsdetektors (2) auftrifft,
und wobei das mindestens eine spektrale Filterelement (22) außerdem eingestellt ist, damit eine Wellenlänge der Bakensignale sich auch außerhalb des Sperrintervalls befindet.

7. Endgerät (100) nach einem der vorhergehenden Ansprüche, das außerdem enthält:
- einen Empfangsphotodetektor (11), der auf eine Wellenlänge der ersten Lasersignale anspricht, und der optisch mit einem Ausgangsende der optischen Faser (1) entgegengesetzt zum Eingangsende (E) gekoppelt ist, um elektrische Empfangssignale abhängig von den ersten vom Endgerät (100) empfangenen Lasersignalen zu erzeugen; und
- einen optischen Verstärker (3), der für die ersten Lasersignale wirksam ist, und der sich auf einer optischen Weglänge des anderen Teils der ersten Lasersignale zwischen dem Eingangsende (E) der optischen Faser (1) und dem Empfangsphotodetektor (11) befindet,
wobei der optische Verstärker (3) bei der Benutzung des Endgeräts (100) eine verstärkte spontane Sendestrahlung erzeugt, und ein Teil der verstärkten spontanen Sendestrahlung die Kalibrierstrahlung beim Austritt durch das Eingangsende (E) der optischen Faser (1) bildet.

8. Endgerät (100) nach einem der vorhergehenden Ansprüche, das eingestellt ist, damit bei der Benutzung des Endgeräts:
die Wellenlänge der ersten Lasersignale zwischen 1540 nm und 1545 nm liegt;
die Wellenlänge der zweiten Lasersignale zwischen 1550 nm und 1555 nm liegt; und
eine Spektralerweiterung der Kalibrierstrahlung das Intervall enthält, das sich von 1530 nm bis 1560 nm erstreckt.

9. Endgerät (100) nach den Ansprüchen 4 und 8, wobei das Sperrintervall des mindestens einen spektralen Filterelements (22) zwischen etwa 1550 nm und etwa 1575 nm liegt.

10. Endgerät (100) nach den Ansprüchen 6 und 8, das außerdem eingestellt ist, damit bei der Benutzung des Endgeräts:
die Wellenlänge der Bakensignale zwischen 1580 nm und 2000 nm liegt.

11. Kommunikationsverfahren, das die folgenden Schritte enthält:
- Bereitstellen eines Endgeräts (100) zur optischen Kommunikation durch Lasersignale, das einen Tracking- und Erfassungsdetektor (2) des Typs Matrix-Bildsensor enthält, wobei lichtempfindliche Elemente an Schnittpunkten von Zeilen und Spalten im Inneren einer Detektionsfläche (S) angeordnet sind, wobei das Endgerät eingerichtet ist, bei einer Benutzung des Endgeräts:
erste Lasersignale zu empfangen, die von einer Quelle (200) gesendet werden, die sich außerhalb des Endgeräts (100) befindet,
einen Teil der ersten Lasersignale auf die Detektionsfläche (S) des Tracking- und Erfassungsdetektors (2) zu richten,
einen anderen Teil der ersten Lasersignale über ein Eingangsende (E) der optischen Faser in eine optische Faser (1) zu injizieren; und
zweite Lasersignale nach außerhalb des Endgeräts (100) zu übertragen, und
- Übertragen der zweiten Lasersignale an die externe Quelle (200) mit Hilfe des Endgeräts (100);
- während die zweiten Lasersignale übertragen werden:
Richten eines Teils der zweiten Lasersignale auf die Detektionsfläche (S) des Tracking- und Erfassungsdetektors (2),
gleichzeitiges Richten auf die Detektionsfläche (S) des Tracking- und Erfassungsdetektors (2) einer Kalibrierstrahlung genannten Strahlung, die in der optischen Faser (1) geführt wird und die durch das Eingangsende (E) der optischen Faser austritt, und
Formen eines Bilds des Eingangsendes (E) der optischen Faser (1) auf der Detektionsfläche (S) des Tracking- und Erfassungsdetektors (2) mit der Kalibrierstrahlung,
**dadurch gekennzeichnet, dass** es außerdem den folgenden zusätzlichen Schritt enthält:
ehe der Teil der zweiten Lasersignale, der auf die Detektionsfläche (S) des Tracking- und Erfassungsdetektors (2) gerichtet ist, und die Kalibrierstrahlung, die das Bild des Eingangsendes (E) der optische Faser (1) formt, zur Detektionsfläche des Tracking- und Erfassungsdetektors gelangen, Reduzieren eines Werts eines Quotienten einer Stärke des Teils der zweiten Lasersignale durch eine mittlere Stärke der Kalibrierstrahlung, die für eine Detektion der Kalibrierstrahlung durch den Tracking- und Erfassungsdetektor effektiv ist.

12. Verfahren nach Anspruch 11, gemäß dem der Wert des Quotienten der Stärke des Teils der zweiten Lasersignale, der auf die Detektionsfläche (S) des Tracking- und Erfassungsdetektors (2) gerichtet ist, durch die mittlere Stärke der Kalibrierstrahlung, die das Bild des Eingangsendes (E) der optischen Faser (1) formt, und die für die Erkennung der Kalibrierstrahlung durch den Tracking- und Erfassungsdetektor effektiv ist, gemäß einem Faktor höher als hundert, vorzugsweise höher als tausend reduziert wird.

## Claims

1. A terminal (100) for optical communication by laser signals, comprising a tracking and acquisition detector (2), of matrix image sensor type in which photosensitive elements are arranged at intersections of rows and columns inside a detection surface (S),
the terminal (100) being arranged to, upon use of said terminal, receive first laser signals emitted by a source (200) which is external to said terminal, and transmit second laser signals to said external source, and so that a part of the first laser signals and a part of the second laser signals are incident on the detection surface (S) of the tracking and acquisition detector (2),
the terminal (100) being further arranged to, upon the use of said terminal, inject another part of the first laser signals into an optical fibre (1), through an input end (E) of said optical fibre, and the terminal being adapted so that, upon the use:
- a radiation called a calibration radiation is led in the optical fibre (1) and exits through the input end (E) of said optical fibre, and
- an image of the input end (E) of the optical fibre (1) is formed on the detection surface (S) of the tracking and acquisition detector (2) with the calibration radiation,
the terminal (100) being **characterised in that** it further comprises at least one spectral filtering element (22) which is disposed so that at least the part of the second laser signals and the calibration radiation which then reach the detection surface (S) of the tracking and acquisition detector (2) pass therethrough, the at least one spectral filtering element having a transmission value for a wavelength of the second laser signals which is lowerthan an average transmission value of said at least one spectral filtering element, effective on a spectral detection interval of the calibration radiation by the tracking and acquisition detector.

2. The terminal (100) according to claim 1, wherein the transmission value of the at least one spectral filtering element (22) for the wavelength of the second laser signals is lower than one hundredth, preferably lower than one thousandth, of the average transmission value of said at least one spectral filtering element which is effective on the spectral detection interval of the calibration radiation by the tracking and acquisition detector (2).

3. The terminal (100) according to claim 1 or 2, wherein the at least one spectral filtering element (22) is of the multilayer interference type filter.

4. The terminal (100) according to any of the preceding claims, wherein the at least one spectral filtering element (22) is of the band rejection type filter, and is adapted so that the wavelength of the second laser signals is within a rejection interval of said at least one spectral filtering element, and so that a wavelength of the calibration radiation is outside the rejection interval.

5. The terminal (100) according to claim 4, wherein the at least one spectral filtering element (22) is further adapted so that a wavelength of the first laser signals is outside the rejection interval.

6. The terminal (100) according to claim 4 or 5, wherein the terminal is further arranged to receive, upon the use of said terminal, beacon signals from the external source (200), and is adapted so that a part of said beacon signals is incident on the detection surface (S) of the tracking and acquisition detector (2),
and wherein the at least one spectral filtering element (22) is further adapted so that a wavelength of the beacon signals is also outside the rejection interval.

7. The terminal (100) according to any of the preceding claims, further comprising:
- a reception photodetector (11) which is sensitive to a wavelength of said first laser signals, and which is optically coupled to an output end of the optical fibre (1), opposite to the input end (E), so as to produce electric reception signals as a function of the first laser signals received by the terminal (100); and
- an optical amplifier (3) which is effective for said first laser signals, and which is located on an optical path of said other part of the first laser signals between the input end (E) of the optical fibre (1) and the reception photodetector (11),
wherein the optical amplifier (3) produces, upon the use of the terminal (100), an amplified spontaneous emission radiation, and a part of said amplified spontaneous emission radiation constitutes the calibration radiation by exiting through the input end (E) of the optical fibre (1).

8. The terminal (100) according to any of the preceding claims, adapted so that, upon the use of said terminal:
the wavelength of the first laser signals is between 1540 nm and 1545 nm;
the wavelength of the second laser signals is between 1550 nm and 1555 nm; and
a spectral range of the calibration radiation contains the interval which extends from 1530 nm to 1560 nm.

9. The terminal (100) according to claims 4 and 8, wherein the rejection interval of said at least one spectral filtering element (22) is between about 1550 nm and about 1575 nm.

10. The terminal (100) according to claims 6 and 8, further adapted so that, upon the use of said terminal:
the wavelength of the beacon signals is between 1580 nm and 2000 nm.

11. A communication method comprising the following steps:
- providing a terminal (100) for optical communication by laser signals, comprising a tracking and acquisition detector (2), of matrix image sensor type in which photosensitive elements are arranged at intersections of rows and columns inside a detection surface (S), the terminal being arranged to, upon use of said terminal:
receive first laser signals emitted by a source (200) which is external to said terminal (100), direct a part of said first laser signals to the detection surface (S) of the tracking and acquisition detector (2),
inject another part of the first laser signals into an optical fibre (1) through an input end (E) of said optical fibre; and
transmit second laser signals to the outside of the terminal (100), and
- transmitting, using the terminal (100), the second laser signals to the external source (200);
- while the second laser signals are transmitted:
direct a part of said second laser signals to the detection surface (S) of the tracking and acquisition detector (2),
simultaneously direct, to the detection surface (S) of the tracking and acquisition detector (2), a radiation called a calibration radiation which is led in the optical fibre (1) and which exits through the input end (E) of said optical fibre, and
form an image of the input end (E) of the optical fibre (1) on the detection surface (S) of the tracking and acquisition detector (2) with the calibration radiation,
**characterised in that** it further comprises the additional following step:
before the part of the second laser signals which is directed to the detection surface (S) of the tracking and acquisition detector (2) and the calibration radiation which forms the image of the input end (E) of the optical fibre (1) reach said detection surface of the tracking and acquisition detector, reducing a value of a quotient of an intensity of said part of the second laser signals to an average intensity of said calibration radiation which is effective for detecting said calibration radiation by the tracking and acquisition detector.

12. The method according to claim 11, wherein the value of the quotient of the intensity of the part of the second laser signals which is directed to the detection surface (S) of the tracking and acquisition detector (2) to the average intensity of the calibration radiation which forms the image of the input end (E) of the optical fibre (1) and which is effective for detecting said calibration radiation by the tracking and acquisition detector, is reduced by a factor greater than one hundred, preferably greater than one thousand.
